Europäisches Patentamt

European Patent Office

Office européen des brevets

(19)

(11) Veröffentlichungsnummer : **0 114 956**
**B1**

(12) **EUROPÄISCHE PATENTSCHRIFT**

(45) Veröffentlichungstag der Patentschrift :
06.05.87

(21) Anmeldenummer : 83111465.7

(22) Anmeldetag : 17.11.83

(51) Int. Cl.⁴ : **F 04 D 29/20**, F 01 P 5/10,
F 16 J 15/34

(54) Dichtungseinheit für insbesondere Flüssigkeitspumpen.

(30) Priorität : 24.12.82 DE 3248074

(43) Veröffentlichungstag der Anmeldung :
08.08.84 Patentblatt 84/32

(45) Bekanntmachung des Hinweises auf die Patenterteilung : 06.05.87 Patentblatt 87/19

(84) Benannte Vertragsstaaten :
AT DE FR GB IT

(56) Entgegenhaltungen :
DE-A- 1 453 716
FR-A- 2 181 111
FR-A- 2 182 272
FR-A- 2 324 913
MACHINE DESIGN, Band 45, Nr. 22, 13. September
1973, Seiten 2-6, Cleveland, USA

(73) Patentinhaber : GOETZE AG
Bürgermeister-Schmidt-Strasse 17
D-5093 Burscheid 1 (DE)

(72) Erfinder : Deuring, Hans
Im Eulenflug 29
D-5093 Burscheid (DE)

## Beschreibung

Die Erfindung betrifft eine Dichtungseinheit, insbesondere für Flüssigkeitspumpen, bestehend aus einem über eine Nabe mit einer Welle verbindbaren Laufrad, einem mit dem Laufrad zusammenwirkenden Gegenring, einer Gleitringdichtung sowie einem alle Teile axial zusammenhaltenden Verbindungskörper.

Durch die DE-A-27 29 928 ist eine Zentrifugalpumpe mit integrierter Dichtungseinheit bekannt. Ein aus Stahl oder faserverstärktem Kunststoff bestehendes Laufrad ist mit einer aus dickwandigem Sinterstahl beziehungsweise Metall bestehenden Nabe fest verbunden. Am freien Ende der Nabe ist über einen Elastomerkörper ein Gegenring angeordnet. Vom freien Ende der Nabe ausgehend, erstreckt sich axial bis hinter die Gleitringdichtung entweder ein metallischer oder aber ein aus dem Elastomerkörper des Gegenringes herausgeformter Verbindungskörper. Nachteilig an einer derartigen Konstruktion ist zu sehen, daß die relativ kompakte Laufrad-Nabe-Verbindung ein relativ hohes Gewicht aufweist und somit ziemlich teuer in der Herstellung ist. Des weiteren besteht keine Möglichkeit, den in vielen Fällen aus sprödem Material — wie z. B. Keramik — bestehenden Gegenring ins Laufrad zu integrieren, um so eine axial kürzer bauende Einheit zu erhalten. Weiterhin ist hier ein zusätzlicher Verbindungskörper — sei er aus Elastomermaterial oder Metall — vorgesehen und auch zwingen erforderlich, um das Laufrad beziehungsweise die Nabe mit der Gleitringdichtung zu einer Einbaueinheit zu verbinden.

Durch die DE-A-26 23 583 ist eine Kreiselpumpe, insbesondere eine Kühlwasserpumpe für Kraftfahrzeuge bekannt. Hier sind Gleitringdichtung, Laufrad und Gegenring ebenfalls zu einer Einbaueinheit zusammengefaßt, dergestalt, daß die Gleitringdichtung ein den Gegenring mit umfassendes Gehäuse aufweist und der Gegenring über einen Elastomerkörper fest mit dem Laufrad verbunden ist. Das aus Metall bestehende Laufrad ist auch hier nicht in der Lage einen aus sprödem Material bestehenden Gegenring unmittelbar ohne Zwischenschaltung einer elastomeren Schicht aufzunehmen. Des weiteren ist auch hier ein separates Verbindungsteil vonnöten um zu einer Einbaueinheit zu gelangen.

Ferner ist durch die US-A-35 94 102 ein Wasserpumpen-Laufrad mit elektrisch isolierenden und korrosionsverhindernden Eigenschaften bekannt. Das aus Kunststoff bestehende Laufrad ist im Bereich seiner inneren Umfangsfläche mit einem axial relativ kurzen metallischen Stützkörper versehen und wird mittels einer Madenschraube radial auf der Welle fixiert. Das Laufrad weist eine ebenfalls aus Kunststoff bestehende axiale Verlängerung auf. Über einen elastischen Körper wird ein Gegenring in einer Ausnehmung des Laufrades gehalten. Wäre der elastische Körper nicht vorhanden und würde der Gegenring z. B. aus einem keramischen Material bestehen, so könnte das nicht nachgebende Kunststoffmaterial des Laufrades bei Temperatureinwirkung ein eventuelles Platzen des spröden Gegenringes nicht verhindern.

Der Erfindung liegt die Aufgabe zugrunde, eine Dichtungseinheit so auszubilden, daß mit möglichst wenigen Teilen eine relativ leichte und kompakte Einbaueinheit geschaffen wird, wobei zur Reduzierung der axialen Baulänge u. a. ein aus sprödem Material bestehender Gegenring vom Laufrad, selbst unter extremen Betriebszuständen nicht zerstörbar, aufgenommen werden kann.

Diese Aufgabe wird erfindungsgemäß gelöst durch ein Laufrad aus einem hartgummiähnlichen Elastomermaterial sowie einer sich im wesentlichen über die gesamte axiale Länge des Laufrades erstreckenden, mit demselben unlösbar verbundenen und das Wellenende im Einbauzustand vollständig umgreifenden Blechnabe.

Durch die Kombination der beiden Werkstoffe wird im Gegensatz zum Stand der Technik eine relativ leichte und vor allen Dingen kostengünstige Verbindung geschaffen. Laufrad und Nabe können sowohl zusammenvulkanisiert als auch miteinander verklebt sein, wobei u. a. durch die Gewichtsreduzierung auch eine Erhöhung des Pumpenwirkungsgrades erzielt wird. Eine weitere Verbesserung wird dadurch erzielt, daß durch die Wahl des Laufradwerkstoffes ein Laufrad mit optimiertem Wirkungsgrad bedingt durch gekrümmte und hinterschnittene Schaufeln sowie einer glatten Oberfläche hergestellt werden kann. Dieses Verfahren ist bisher nur möglich bei metallischen Laufrädern, die im Gußverfahren mit verlorenen Kernen (also relativ kostenintensiv) produziert werden können.

Das Elastomermaterial des Laufrades soll so hart sein, daß es extremen Anforderungen im Betriebszustand widersteht, es soll jedoch gleichzeitig noch so viel Elastizität aufweisen, um einen aus einem spröden Material — wie z. B. Keramik — bestehenden Gegenring, ohne Zwischenschaltung weiterter Elastomerkörper, aufzunehmen. Zu diesem Zweck ist der Gegenring in einer der Gleitringdichtung axial gegenüberliegenden Ausnehmung des Laufrades eingepreßt, wobei die Ausnehmung im Bereich mindestens einer Umfangsfläche ein Wellprofil aufweist. Durch die Ausbildung des Wellprofiles wird im wesentlichen die Elastizität erreicht, die benötigt wird, um die Herstelltoleranzen auszugleichen und ein gegebenenfalls durch Thermoschock herbeiführbares Platzen des Gegenringes zu vermeiden. Der spröde Gegenring ist somit in der Lage, bei temperaturbedingter Ausdehnung in radialer Richtung, das restelastische Material des Laufrades zu verdrängen und sich so unterschiedlichen Gegebenheiten im Betriebszustand anzupassen.

Durch diese Maßnahme ist sichergestellt, daß gegebenenfalls Materialfehler aufweisende Gegenringe noch beim Hersteller der Dichtungseinheiten ausgetauscht werden können, ohne daß das gesamte Laufrad weggeworfen werden muß.

Dies ist jedoch zwangsläufig bei einem durch die DE-A-14 53 716 bekannten Laufrad der Fall, das zum Teil aus Kautschuk besteht und sowohl Versteifungselemente als auch einen angeformten Gegenring aufweist. Bedingt durch die Elastizität des Kautschuks müssen im Gegensatz zum Laufrad der erfindungsgemäßen Dichtungseinheit zwangsläufig Versteifungselemente vorhanden sein, um eine gewisse Stabilität zu erzeugen. Sämtliche Teile sind durch Vulkanisation beziehungsweise Verleimung miteinander verbunden, wobei kein Austausch beschädigter Teile möglich ist. Das Laufrad erfindungsgemäß vollständig aus einem hartgummiähnlichen Elastomermaterial mit restelastischen Eigenschaften herzustellen und den Gegenring in eine Ausnehmung des Laufrades einzupressen beziehungsweise einzustecken und zu fixieren ist diesem Stand der Technik nicht entnehmbar.

Einem weiteren Gedanken der Erfindung gemäß erstreckt sich die Nabe axial zumindest bis unter den vom Elastomermaterial des Laufrades umgebenen Gegenring, wobei der mit dem Gegenring zusammenwirkende Nabenbereich vorzugsweise mit mindestens einer das Elastomermaterial des Laufrades radial in Richtung des Gegenringes verspannenden Sicke versehen ist. Durch diese Maßnahme soll jeder Gegenring bei losweise auftretenden Toleranzschwankungen zum einen sicher in der Ausnehmung des Laufrades gehalten und zum anderen beim Vulkanisationsvorgang ein Gummiüberlauf in Richtung der Gleitringdichtung vermieden werden. Vorzugsweise ist die Sicke umlaufend ausgebildet, um eine gleichmäßige Kraftverteilung am gesamten Ringumfang zu erzeugen. Andere Konturen sind jedoch in Abhängigkeit vom Werkstoff des Gegenringes ebenfalls denkbar.

Eine weitere vorteilhafte Weiterbildung des Laufrades beziehungsweise der damit verbundenen Nabe ist darin zu sehen, daß letztere einstückig, bis axial über das Laufrad hinausgehend, in Richtung auf die Gleitringdichtung verlängert ist. Je nach Ausbildung der Gleitringdichtung, die gegebenenfalls über einen separaten Verbindungskörper mit dem Laufrad verbunden sein kann, dient die axiale Verlängerung als Führungskörper für die gesamte Gleitringdichtung beziehungsweise nur Teilen davon.

Darüberhinaus besteht jedoch auch die Möglichkeit, die Nabe einstückig soweit axial zu verlängern, daß sie als Verbindungskörper zwischen dem Laufrad und der Gleitringdichtung dient. Im Gegensatz zur DE-A-27 29 928 würden hier zwei zusätzliches Teile entfallen, da die Nabe unmittelbar als Verbindungsteil fungiert und den Gegenring ohne Zwischenschaltung eines zusätzlichen Elastomerkörpers trägt. Zu diesem Zweck kann das freie Ende der Nabe radial ganzflächig oder nur teilweise — z. B. in Form federnder Zungen — in Richtung auf die Gleitringdichtung abgebogen sein. Je nach Ausführung der mit dem Laufrad zu verbindenden Gleitringdichtung kann der Axialschenkel der Nabe im Bereich der Gleitringdichtung jedoch auch andere Formen annehmen. Durch diese Maßnahme wird eine aus wenigen Teilen bestehende, relativ leichte Dichtungseinheit gebildet, die einstückig in das jeweilige Maschinenteil eingebaut werden kann. Des weiteren besteht auch die Möglichkeit, die Sicke bewußt so auszubilden, daß bei dem Vulkanisationsvorgang Elastomermaterial axial entlang der Nabe bis in ihren Endbereich fließen kann und dort unter Bildung eines Wulstes aushärtet. Der Wulst könnte dann, in der Art eines Schnappverschlusses wirkend, die Gleitringdichtung axial fixieren.

Die Erfindung ist in der Zeichnung dargestellt und wird im folgenden näher beschrieben. Es zeigen :

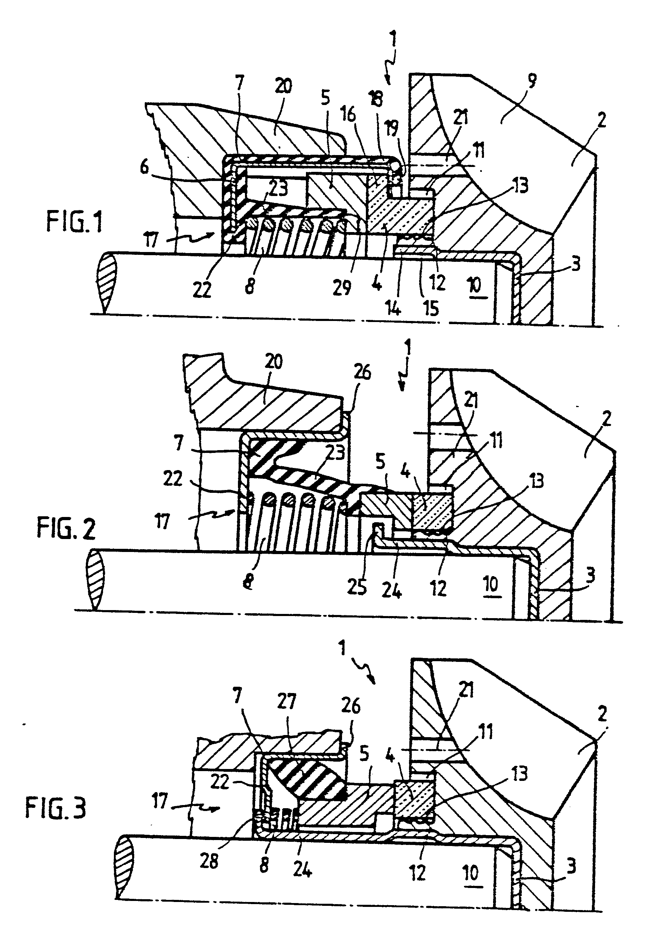

Figuren 1-3 erfindungsgemäße Dichtungseinheit in unterschiedlichen Ausführungen.

Die Figuren 1-3 zeigen unterschiedliche Ausführungsbeispiele der erfindungsgemäßen Dichtungseinheit. Soweit möglich werden für gleiche Bauteile auch gleiche Bezugszeichen verwendet.

Figur 1 zeigt eine Dichtungseinheit 1, die im wesentlichen aus einem Laufrad 2, einer Nabe 3, einen Gegenring 4, einem Gleitring 5, einem versteiften 6 elastomeren Gleitringdichtungsgehäuse 7 sowie einer Feder 8 besteht. Erfindungsgemäß besteht das Laufrad 2 aus einem hartgummiähnlichen Elastomerkörper mit radial nach außen gerichteter Beschaufelung 9. Für die Erfindung unwesentlich ist, ob die Beschaufelung 9 auf der Gleitringseite oder auf der Stirnseite (wie abgebildet) der nicht weiter dargestellten Pumpe angeordnet ist. Durch Vulkanisation mit dem relativ harten Laufrad 2 verbunden ist eine topfförmig, im Einbauzustand das Wellenende 10 vollständig umgreifende, aus Blech gezogene Nabe 3, die sich über die gesamte axiale Länge des Laufrades 2 erstreckt. Ein Gegenring 4 aus einem keramischen Werkstoff, z. B. gesintertem beziehungsweise gepreßtem $Al_2O_3$ oder gebranntem $SiO_2$, ist in einer Ausnehmung 11 des Laufrades 2 angeordnet. Die Korrespondierende Umfangsfläche 12 des Laufrades 2 ist mit einem Wellprofil 13 versehen, durch welches ein Restelastizität des relativ harten Laufrades 2 sichergestellt wird, um ein eventuelles Platzen des spröden Gegenringes 4 unter Thermoschockbedingungen zu verhindern. Das Nabenende 14, welches sich axial bis unter den Gegenring 4 erstreckt ist mit einer umlaufenden, sich radial in Richtung des Gegenringes 4 erstreckenden Sicke 15 versehen. Durch diese Maßnahme wird der Gegenring 4 auch bei Toleranzunterschieden sicher in der Ausnehmung 11 des Laufrades gehalten. Der Gegenring 4 ist vorzugsweise winkelförmig mit einem radial nach außen sich erstreckenden Ansatz 16 versehen. Das Gehäuse 7 einer Gleitringdichtung 17, wie sie etwa in der DE-A-26 23 583 beschrieben ist, ist axial verlängert 18 und faßt mit einem abgebogenen Radialschenkel 19 axial hinter den Ansatz 16 des Gegenringes 4. Mittels eines speziellen Werkzeuges, wie es z. B. in der DE-A-27 29 928 beschrieben ist, könnte die Dichtungseinheit 1 in das nur angedeutete Pumpengehäuse 20 eingepreßt werden, wobei zu diesem Zweck an sich bekannte axial verlaufende Ausnehmungen 21 im Laufrad 2 vorgesehen sind. Wie schon angesprochen, besteht die Gleitringdichtung 17 aus einem elastomeren Gehäuse 7, welches mittels eines winkelförmigen Versteifungsringes 6 verstärkt ist. Am Radialschenkel 22 des Gehäuse ist einstückig eine Membran 23 angeformt, auf welche der Gleitring 5 axial aufgesteckt ist. Eine Feder 8 erstreckt sich axial zwischen dem Radialschenkel 22 des Gehäuses 7 und der Stirnfläche 29 des Gleitringes 5.

Figur 2 ist im wesentlichen analog zu Figur 1 zu sehen, mit dem Unterschied, daß die Verbindung zwischen dem Laufrad 2 und der Gleitringdichtung 17 durch eine axiale Verlängerung 24 der Nabe 3 gebildet wird. Das freie Ende 25 der Nabe 3 ist im Bereich des abgestuften Gleitringes 5 radial auf diesen zu abgebogen. Die Gleitringdichtung 17 ist etwa analog zur vorab beschriebenen zu sehen. Sie besteht aus einem winkelförmigen hier jedoch metallischen Gehäuse 7 mit radialem Ansatz 26, der als Anschlagbegrenzung für den Einpreßvorgang in das Pumpengehäuse 20 dient. Gehäuse 7, Membran 23 und Gleitring 5 sind einstückig zusammenvulkanisiert und die Feder 8 erstreckt sich zwischen dem Radialschenkel 22 des Gehäuses 7 und dem Ende der den Gleitring 5 teilweise umgebenden Membran 23.

Die Dichtungseinheit 1 gemäß Figur 3 unterscheidet sich von den beiden anderen im wesentlichen dadurch, daß die Nabe 3 des Laufrades 2 axial soweit verlängert ist 24, daß sie, als Verbindungskörper zwischen Laufrad 2 und Gleitringdichtung 17 dienend, bis axial hinter die Gleitringdichtung 17 reicht und dort radial abgebogen ist. Die Gleitringdichtung 17 selber besteht aus einem winkelförmigen Gehäuse 7 mit einem, den Ausnehmungen 21 im Laufrad 2 axial gegenüberliegenden, radialem Anschlag 26, einem Gleitring 5, einer Feder 8 mit rechteckigem Querschnittsprofil sowie einem vom Schlauch abgestochenen, sich im wesentlichen konisch zwischen dem Gehäuse 7 und dem Gleitring 5 erstreckenden Federdichtring 27. Der Radialschenkel 22 des Gehäuses 7 ist im Bereich seines freien Endes geringfügig axial in Richtung des Gleitringes 5 abgebogen, damit im Einbauzustand der Dichtungseinheit 1 keine Reibung zwischen dem Radialschenkel 22 und dem abgebogenen Ende 28 der verlängerten Nabe 3 auftreten kann.

### Patentansprüche

1. Dichtungseinheit, insbesondere für Flüssigkeitspumpen, bestehend aus einem über eine Nabe mit einer Welle verbindbaren Laufrad, einem mit dem Laufrad zusammenwirkenden Gegenring, einer Gleitringdichtung sowie einem alle Teile axial zusammenhaltenden, im Bereich einer Umfangsfläche der Dichtungseinheit angeordneten Verbindungskörper, gekennzeichnet durch ein Laufrad (2) aus einem hartgummiähnlichen Elastomermaterial sowie einer sich im wesentlichen über die gesamte axiale Länge des Laufrades (2) erstreckenden, mit demselben unlösbar verbundenen und das Wellenende (10) im Einbauzustand vollständig umgreifenden Blechnabe (3).

2. Dichtungseinheit mit einem aus einem relativ spröden Material bestehenden Gegenring nach Anspruch 1, dadurch gekennzeichnet, daß der Gegenring (4) in einer der Gleitringdichtung (17) gegenüberliegenden Ausnehmung (11) des Laufrades (2) eingepreßt ist, die im Bereich mindestens einer Umfangsfläche (12) ein Wellprofil (13) aufweist.

3. Dichtungseinheit nach den Ansprüchen 1 und 2, dadurch gekennzeichnet, daß die Nabe (3) sich axial zumindest bis unter den vom Elastomermaterial des Laufrades (2) umgebenen Gegenring (4) erstreckt.

4. Dichtungseinheit nach den Ansprüchen 1 bis 3, dadurch gekennzeichnet, daß der mit dem Gegenring (4) zusammenwirkende Nabenbereich (14) mit mindestens einer das Elastomermaterial des Laufrades (2) radial in Richtung des Gegenringes (4) verspannenden Sicke (15) versehen ist.

5. Dichtungseinheit nach den Ansprüchen 1 bis 4, dadurch gekennzeichnet, daß die Sicke (15) umlaufend ausgebildet ist.

6. Dichtungseinheit nach den Ansprüchen 1 bis 5, dadurch gekennzeichnet, daß die Nabe (3) einstückig, bis axial über das Laufrad (2) hinausgehend, in Richtung auf die Gleitringdichtung (17) verlängert (24) ist.

7. Dichtungseinheit nach den Ansprüchen 1 bis 6, dadurch gekennzeichnet, daß die Nabe (3), als Verbindungskörper zwischen Laufrad (2) und Gleitringdichtung (17) dienend, bis axial hinter die Gleitringdichtung (17) verlängert und im Bereich ihres freien Endes (24) radial abgebogen (28) ist.

### Claims

1. Seal unit, especially for liquid pumps, consisting of an impeller capable of being connected to a shaft via a hub, a counter-ring interacting with the impeller, a mechanical face seal and a connecting element located in the region of one circumferential surface of the seal unit and holding all the parts together axially, characterized by an impeller (2) composed of a hard-rubber-like elastometric material and a metal hub (3) which essentially extends the full axial length of the impeller (2), is permanently connected thereto and completely encompasses the end of the shaft (10) in fitted state.

2. Seal unit with a counter-ring of a relatively brittle material according to Claim 1, characterized by the fact that the counter-ring (4) is pressed into a recess (11) in the impeller (2) opposite the mechanical face seal (17), the recess (11) having a corrugated profile (13) in at least one circumferential surface (12).

3. Seal unit according to Claims 1 and 2, characterized by the fact that the hub (3) extends axially at least to below the counter-ring (4) surrounded by the elastometric material of the impeller (2).

4. Seal unit according to Claims 1 to 3, characterized by the fact that the part of the hub (14) interacting with the counter-ring (4) possesses at least one flange (15) which presses the elastomeric material of the impeller (2) radially towards the counter-ring (4).

5. Seal unit according to Claims 1 to 4, characterized by the fact that the flange (15) extends all the way round.

6. Seal unit according to Claims 1 to 5, characterized by the fact that the hub (3) is elongated (24) in one piece and extends axially beyond the impeller (2) towards the mechanical face seal (17).

7. Seal unit according to Claims 1 to 6, characterized by the fact that the hub (3), acting as a connecting element between impeller (2) and mechanical face seal (17), is elongated axially beyond the mechanical face seal (17) and is bent radially (28) at its free end (24).

**Revendications**

1. Unité d'étanchéité, en particulier pour des pompes à liquide, se composant d'une roue à aubes assujetissable à un arbre sur un moyeu, d'une contre-bague coopérant avec la roue à aubes, d'une garniture étanche à anneau glissant, de même que, disposé au niveau d'une surface circonférentielle de l'unité d'étanchéité, un corps de liaison maintenant axialement toutes les pièces, caractérisée par une roue à arbres (2) faite d'un matériau élastomère similaire à de l'ébonite, ainsi que par un moyeu (3) de tôle s'étendant sensiblement sur toute la longueur axiale de la roue à arbres (2), ledit moyeu assujetti de façon indétachable à la roue à arbres (2) et enveloppant complètement l'extrémité de l'arbre (10) lorsque l'ensemble est montée.

2. Unité d'étanchéité munie d'une contre-bague faite d'un matériau relativement fragile selon la revendication 1, caractérisée en ce que la contre-bague (4) est introduite à force dans un évidement (11) de la roue à arbres (2) situé vis-à-vis de la garniture étanche à anneau glissant (7), lequel évidement (11) comporte au niveau d'au moins une surface circonférentielle (12) un profil ondulé (13).

3. Unité d'étanchéité selon la revendication 1 ou 2, caractérisée en ce que le moyeu (3) s'étend axialement au moins jusque sous l'anneau de glissement (4) enveloppé du matériau élastomère de la roue à arbres (2).

4. Unité d'étanchéité selon une des revendications 1 à 3, caractérisée en ce que la portion de moyeu (14) coopérant avec la contre-bague (4) est munie d'au moins une moulure (15) épaulant le matériau élastomère de la roue à arbres (2) radialement dans la direction de la contre-bague (4).

5. Unité d'étanchéité selon les revendications 1 à 4, caractérisée en ce que la moulure (15) est circonférentielle.

6. Unité d'étanchéité selon les revendications 1 à 5, caractérisée en ce que le moyeu (3) est prolongé d'une pièce jusqu'à faire axialement sallie sur la roue à arbres (2) dans la direction de la garniture étanche à anneau glissant (17).

7. Unité d'étanchéité selon les revendications 1 à 6, caractérisée en ce que le moyeu (3), servant de corps de liaison entre la roue à arbres (2) et la garniture étanche à anneau glissant (17), est prolongée axialement jusque derrière la garniture étanche à anneau glissant (17) et est courbée radialement au niveau de son extrémité libre (24).

FIG.1

FIG. 2

FIG.3